Europäisches Patentamt

European Patent Office

Office européen des brevets

(19)

(11) Numéro de publication: **0 392 419**
**A1**

(12) **DEMANDE DE BREVET EUROPEEN**

(21) Numéro de dépôt: **90106748.8**

(22) Date de dépôt: **09.04.90**

(51) Int. Cl.⁵: **H02J 1/10, H02M 3/335**

(30) Priorité: **14.04.89 FR 8904972**

(43) Date de publication de la demande:
**17.10.90 Bulletin 90/42**

(84) Etats contractants désignés:
**DE FR GB IT**

(71) Demandeur: **ALCATEL ESPACE**
**11, avenue Dubonnet**
**F-92407 Courbevoie Cédex(FR)**

(72) Inventeur: **Capel, Antoine**
**241 Résidence Les Cotaux**
**F-31520 Ramonville(FR)**

(74) Mandataire: **Weinmiller, Jürgen et al**
**Lennéstrasse 9 Postfach 24**
**D-8133 Feldafing(DE)**

(54) **Dispositif de regulation d'un paramètre électrique lors d'un transfert d'énergie entre deux réseaux.**

(57) L'invention concerne un dispositif de régulation d'un paramètre électrique à asservir au moyen d'un transfert électrique entre deux réseaux (11, 12) dans lequel ledit dispositif (10) est un dispositif bidirec-tionnel en courant qui assure l'isolation électrique entre ces deux réseaux (11, 12).

Application notamment au domaine spatial.

# FIG.1

EP 0 392 419 A1

## Dispositif de régulation d'un paramètre électrique lors d'un transfert d'énergie entre deux réseaux

L'invention concerne un dispositif de régulation d'un paramètre électrique lors d'un transfert d'énergie entre deux réseaux.

Le dispositif de l'invention peut s'utiliser chaque fois qu'un paramètre électrique doit être asservi au moyen d'un transfert d'énergie. Ces applications couvrent donc notamment les domaines grand public, aéronique et spatial. Dans le domaine spatial, ce type d'asservissement est utilisé sur les plateformes (conditionnement de puissance, commande de BAPTA (ou "bearing and Power Transfer Assembly"), contrôle d'attitude par roues d'inertie etc...) et les charges utiles (distribution électrique, commande de pointage, contrôle thermique actif, etc...)

On peut citer entre autres, les fonctions suivantes :
. plateforme :
-chargeur/déchargeur de batteries ;
-conditionnement d'énergie par roues d'inertie ;
-conditionnement de puissance ;
-commande des moteurs de type continue pas à pas
. charge utile :
-convertisseur et régulateur d'équipements ;
-EPC (ou "Electronic Power conditionner") basse tension (SSPA ou "Solid State Power Amplifier") et haute tension (ATOP ou "Amplificateur à Tube à Onde Progressive") ;
- alimentation de radar et altimètre ;
- commandes de moteur pour mécanisme de pointage d'antenne, de radiomètre, de laser etc...

La régulation d'un paramètre par une structure électrique peut se faire de deux façons :
- par résonance série ou parallèle à l'aide de pont en H à thyristors ou transistors ;
- par contrôle PWM ("Pulse Wave Modulator").

Ce transfert d'énergie se fait sans isolation galvanique dans les deux cas lorsqu'il est nécessaire de combiner les avantages d'un transfert statique et dynamique (rendement énergétique meilleur que 90%).

Les structures résonnantes associent un circuit LC à un ensemble de commutateur formant des ponts en H, chaque pont étant relié au réseau électrique échangeant le flux énergétique.

Dans une réalisation possible ("Series-resonnant energy conversion with multi-segment current waveforms for bipolar energy flow" de J.B. Klaassens et J. Van Duivenbode paru dans PESC 88 RECORD, Avril 1988) les commutateurs sont des thyristors. Le réseau résonnant LC est le lien entre les deux réseaux échangeant l'énergie, les autres réseaux étant déconnectés par les interrupteurs.

Le paramètre asservi est généralement la tension du réseau récepteur d'énergie.

Un autre type d'application décrit dans le document cité ci-dessus (PESC 88) définit un conditionneur d'énergie entre deux roues d'inertie. Chaque roue est représentée par une induction et une source de courant. Le réseau résonnant est complété par la capacité C commune aux deux réseaux.

Ces applications se caractérisent par la circulation de courants de type sinusoïdaux.

Les structures PWM se caractérisent par un contrôle en largeur d'impulsion des commutateurs et une circulation de courants de type triangulaires.

L'invention a pour but de réduire, le plus possible, les pertes électriques dans des dispositifs de ce type.

Dans un autre document de l'art antérieur intitulé "A bi-directional high power cell using large signal feedback control with maximum current conduction control (MC³) for space application", paru dans IEEE 1986, le principe d'un transfert énergétique bidirectionnel est analysé et le contrôle par variable d'état du système boucle fort signal est présenté dans le cas d'un PWM "smart", les avantages de ce principe étant décrits dans le cas d'un régulateur de batterie. L'analyse fort signal et le module mathématique sont décrits en utilisant un modèle variable d'état continu sur une période d'échantillonnage. Le comportement par contrôle en courant MC³ est testé et son modèle équivalent est vérifié par simulation.

Mais un tel dispositif n'assure aucune isolation galvanique : Il n'y a pas de découplages de masse ce qui est très important notamment pour obtenir une immunité au bruit.

L'invention a pour objet de pallier ces différents inconvénients.

Elle propose à cet effet un dispositif de régulation d'un paramètre électrique à asservir au moyen d'un transfert électrique entre deux réseaux, ledit dispositif étant un dispositif bidirectionnel en courant, qui assure l'isolation électrique entre ces deux réseaux, et qui comprend plusieurs interrupteurs, caractérisé en ce qu'il comprend :
- un modulateur contrôlé en courant pour le pilotage des interrupteurs de manière à limiter le courant crête dans ces interrupteurs et le courant continu en sortie,
- un étage de puissance bidirectionnel,
- un étage transformateur bidirectionnel d'un point de vue échange énergétique et limité en courant crête, pour fournir une tension et un courant régulé et pour assurer une isolation galvanique ;
- une chaîne de commande de l'étage de puissance comportant :

. un circuit d'adaptation d'impédance,

. une cellule de commande en courant reliée à l'étage de puissance par l'intermédiaire d'un étage "driver" et qui reçoit un signal issu d'un module horloge et un signal provenant du réseau d'entrée,

- un étage push-pull bidirectionnel en courant.

Ainsi l'échange d'énergie se fait avec des valeurs de tensions et de courants distinctes ($V_1$, $i_1$ d'un côté, $V_2$, $i_2$) de l'autre avec l'objectif de réduire au minimum les pertes électriques de sorte qu'idéalement : $V_1$ $i_1$ = $V_2$ $i_2$.

Avantageusement le dispositif de l'invention comprend des interrupteurs associés à des éléments réactifs pour le lissage des commutations ; il fonctionne en régime échantillonné en utilisant des interrupteurs sans pertes.

Il permet ainsi :

- de faire transiter de l'énergie électrique dans les deux sens entre deux réseaux électriques, en maintenant une isolation électrique entre ceux-ci.

- de réaliser un transfert d'énergie de type statique ou dynamique.

Avantageusement dans le dispositif de l'invention l'excès d'énergie est récupéré et transféré de la sortie de ce dispositif vers le réseau d'entrée, cet excès d'énergie étant minimisé par l'augmentation en bande passante dudit dispositif.

Il permet ainsi de réaliser un transfert d'énergie bidirectionnel permettant d'obtenir des rendements électriques élevés.

Avantageusement le dispositif de l'invention, qui comprend un modulateur contrôlé en courant pour le pilotage des interrupteurs de manière à limiter le courant crête dans ces interrupteurs et le courant continu en sortie, permet ainsi ;

- de limiter le courant fourni au réseau extérieur en cas de malfonctionnement en sortie des réseaux, et de contrôler le courant crête dans les interrupteurs les protégeant contre des surintensités destructives. Ces limitations qui sont contrôlées par les temps de conductions déterminés des interrupteurs se font idéalement sans perte.

- d'assurer, du fait de la présence d'interrupteurs commandés en entrée et sortie de la structure bidirectionnelle, une déconnexion immédiate partielle, définitive des réseaux ainsi qu'une reconnection, en cas de malfonctionnement des réseaux ou de la structure et en cas d'un ordre envoyé par télécommande,

- de définir une structure électrique standardisable, dont le poids et le volume dépendent des conditions d'utilisation (fréquence de travail, puissance transferrée), capable d'assurer un échange mono-entrée , multi-sorties (plusieurs tensions secondaires).

Les caractéristiques et avantages de l'invention ressortiront d'ailleurs de la description qui va suivre, à titre d'exemple non limitatif, en référence aux figures annexées sur lesquelles :

- la figure 1 illustre le dispositif de l'invention ;

- la figure 2 illustre une réalisation du dispositif de l'invention ;

- les figures 3 à 7 illustrent le fonctionnement de la réalisation représentée sur la figure 2.

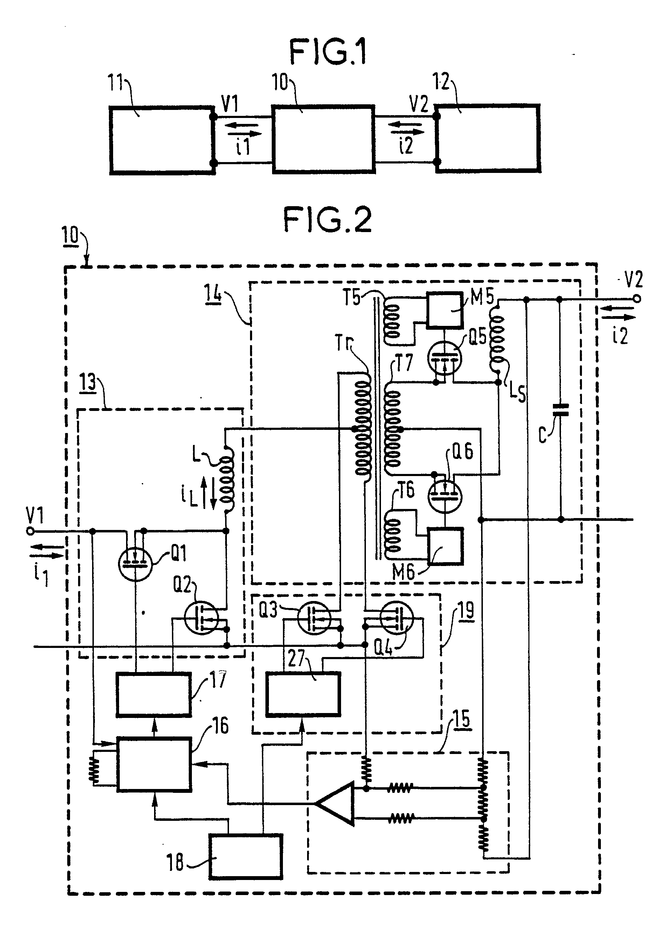

Sur la figure 1, le dispositif de l'invention 10, est disposé entre un réseau d'entrée 11 et un réseau de sortie 12. Ce dispositif est une structure électrique composée d'interrupteurs parfaits associés à des éléments réactifs (capacités, inductances, transformateur) dans le but de faire transiter de l'énergie entre les deux réseaux électriques 11 et 12 qui lui sont connectés, tout en assurant l'isolation galvanique de ces derniers. Ce transfert d'énergie s'effectue avec des valeurs de tensions et de courants distinctes ($V_1$, $i_1$ d'un côté, $V_2$, $i_2$ de l'autre) avec l'objectif de réduire au minimum les pertes électriques de sorte qu'idéalement : $V_1$ $I_1$ = $V_2$ $i_2$

Une structure électrique de ce type doit donc opérer en régime échantillonNé utilisant des commutateurs sans perte.

Avantageusement le dispositif de l'invention permet de :

- faire transiter de l'énergie électrique entre ces deux réseaux électriques 11 et 12, en maintenant une isolation électrique entre ceux-ci ;

- réaliser un transfert d'énergie de type statique ou dynamique :

. Il est statique pour assurer un écoulement continu d'énergie d'un réseau vers l'autre, l'amplitude et le sens étant contrôlés par des asservissements adéquats. Par exemple ce dispositif permet de gérer la distribution électrique triangulaire d'un satellite entre le réseau solaire, les batteries et les utilisateurs.

. Il est dynamique si le transfert d'énergie implique une récupération immédiate d'un excès d'énergie d'un réseau sur l'autre, pour obtenir des formes d'onde transitoires idéales. C'est le cas d'un réseau électrique pulsé (type radar) associé à une source continue. Le transfert dynamique s'applique également au cas d'une utilisation statique dont le comportement en fréquence exige une large bande passante dans les deux sens d'utilisations. Le transfert dynamique s'applique aussi aux utilisations statiques conventionnelles unidirectionnelles en améliorant les performances en fréquence (bande passante, marges) et en pollution (bruits rejetés, transconductance).

- réaliser un transfert d'énergie bidirectionnel permettant d'obtenir des rendements électriques élevés pour deux raisons essentielles :

. l'excès d'énergie est récupéré et transféré de la sortie vers le filtre d'entrée ou réseau d'entrée 11 au lieu d'être dissipé,

. l'excès d'énergie, à récupérer est minimisé par l'augmentation de la bande passante du système.

- utiliser un modulateur contrôlé en courant pour le pilotage des interrupteurs, pour limiter ainsi le courant crête dans les interrupteurs et le courant continu en sortie des réseaux. Ces limitations qui sont contrôlées par les temps de conductions déterminés des interrupteurs se font idéalement sans perte.

- assurer,du fait de la présence d'interrupteurs commandés en entrée et sortie de la structure bidirectionnelle, une déconnexion immédiate partielle, définitive des réseaux ainsi qu'une reconnexion, en cas de malfonctionnement des réseaux ou de la structure ainsi que sur ordre par télécommande.

- définir une structure électrique standardisable, dont le poids et le volume dépendent des conditions d'utilisation (fréquence de travail, puissance transferrée), capable d'assurer un échange mono-entrée, multi-sorties (plusieurs tensions secondaires).

Comme représenté sur la figure 2, le dispositif selon l'invention comprend :
- un étage de puissance bidirectionnel 13,
- un étage transformateur 14 pour fournir une tension ou un courant régulé, et permettant un transfert d'énergie bidirectionnel,
- et une chaîne de commande de l'étage de puissance comportant :
. un circuit d'adaptation d'impédance 15,
. une cellule 16 de commande en courant reliée à l'étage de puissance par l'intermédiaire d'un étage "driver" 17 et qui reçoit un signal issu d'un module horloge 18 et un signal provenant du réseau d'entrée,
- un étage push-pull bidirectionnel 19, comportant un étage driver 27.

L'étage de puissance 13 est représenté par les éléments réactifs LC associés aux interrupteurs $Q_1$ et $Q_2$, travaillant en PWM.

L'isolation galvanique est obtenue grâce à l'étage transformateur 14, en découpant à 50% de rapport cyclique la tension continue générée au point milieu d'un transformateur $T_r$, au moyen des interrupteurs $Q_3$ et $Q_4$ de l'étage push-pull 19.

L'énergie transferrée au secondaire du transformateur Tr, sous forme de tension alternative rectangulaire, est rectifiée par les interrupteurs $Q_5$ et $Q_6$ et filtrée par le réseau $L_sC$. Dans cette réalisation, le paramètre asservi est une tension $V_2$.

L'aspect bidirectionnel est obtenu en remplaçant les interrupteurs unidirectionnels classiques par des interrupteurs bidirectionnels (transistors $Q_1$, $Q_3$, $Q_4$ et diodes $Q_2$, $Q_5$, $Q_6$, en l'occurence des Hex-fet qui présentent une faible résistance dans les deux sens.

La différence essentielle avec les dispositifs connus est l'association d'une rectification synchrone autosynchronisable à l'aide des enroulements secondaires $T_5$ et $T_6$ associés aux modules de pilotage $M_5$ et $M_6$, des interrupteurs $Q_5$ et $Q_6$. L'élément magnétique est un auto-transformateur qui sert à ajuster les tensions entre primaire et secondaire sans isolation galvanique.

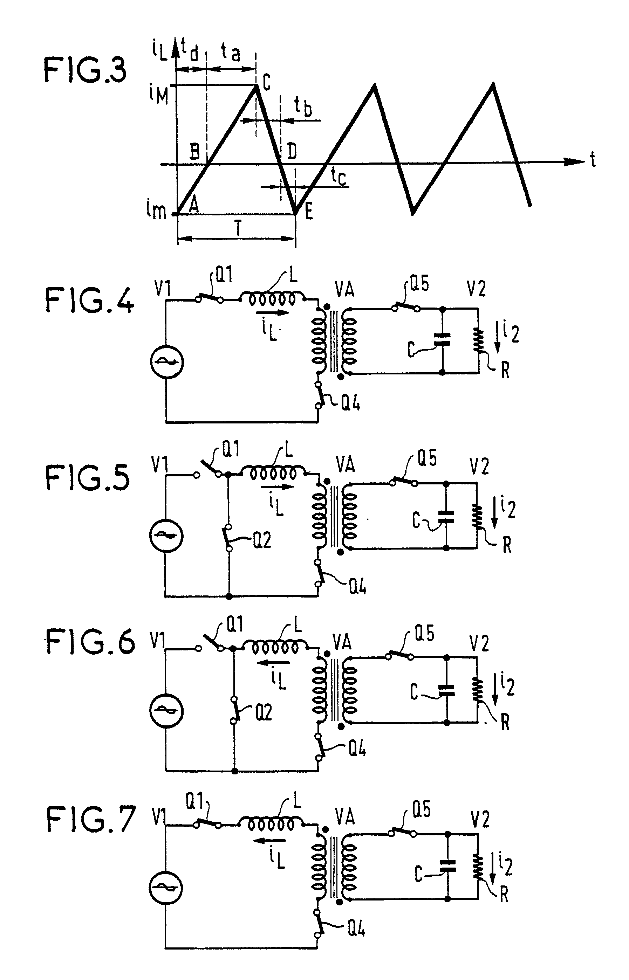

Le courant $i_L$ transitant dans la structure électrique est triangulaire comme représenté sur la figure 3 avec des contributions positives et négatives dans le cas d'un transfert de type dynamique, de sorte que le courant $i_2$ délivré au réseau de sortie sur une période d'échantillonnage T soit tel que :

$$i_2 = \frac{1}{T} \int_o^T i_L(t)\, dt$$

On peut donc mettre en évidence quatre structures électriques selon le fonctionnement des divers interrupteurs :
- Sur la réalisation de la figure 4, le transistor $Q_1$ de l'étage de puissance 13 est passant de même que les interrupteurs $Q_4$ et $Q_5$ de l'étage push pull 19 et de la rectification synchrone due à l'étage transformateur 14 qui opèrent à une fréquence moitié de celle régissant l'étage de puissance 13.

Le courant dans l'inductance L, se déplace des points B à C sur la figure 3, le courant $i_L$ étant tel que

$$i_L = \frac{V1 - VA}{L}\, t$$

Le courant maximum dans la self L $i_M$ est défini par

$$i_M = \frac{V1 - VA}{L}\, t_a$$

- Sur la réalisation de la figure 5, le point de fonctionnement se déplace positivement du point C au point D, car $Q_1$ est ouvert et $Q_2$ est passant. On a $i_L = i_M - \frac{VA}{L} t_b$
Au point D : $i_L(D) = 0$
D'autre part : $i_M = \frac{VA}{L} t_b$
- Sur la réalisation de la figure 6 c'est une structure pour laquelle le courant s'inverse. Elle correspond à la conduction de $Q_2$ de l'étage de puissance. Dans ce cas, le courant conserve la même pente de sorte que du point D au point E : $i_L = -\frac{VA}{L} t$
Le courant minimal dans la self L est : $i_m = -\frac{VA}{L} t_c$
- Sur la réalisation de la figure 7, toujours en conduction inversée du courant, cette structure correspond à la conduction de $Q_1$ et l'ouverture de

$Q_2$. Le point de fonctionnement se déplace de E ou A vers B. On a :

$$i_L = i_m + \frac{V1 - VA}{L} t$$

et à la limite : $i_L (B) = O$

Si $t_a$, $t_b$, $t_c$, $t_d$ sont les durées d'existence de ces structures, on a : $t_a + t_b + t_c = t_d = T$
et comme il s'agit d'une structure bidirectionnelle, ces équations statiques sont définies par :

$$\frac{V2}{V1} = \frac{t_a + t_d}{T}$$

$$\frac{VA}{V1 - VA} = \frac{t_a + t_d}{t_b + t_c}$$

L'énergie qui transite par la structure sur une période T, est définie par

$$E = V_A T \left( \frac{i_M - i_m}{2} \right)$$

L'introduction d'un senseur de courant discret comme il est indiqué sur la figure 2 permet d'imposer une valeur maximale $i_M$ au courant crête dans certaines applications et d'imposer à la fois $i_M$ et $i_m$ c'est-à-dire les courants crêtes positifs et négatifs dans d'autres applications, si le senseur est lui-même bidirectionnel.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

## Revendications

1/ Dispositif de régulation d'un paramètre électrique à asservir au moyen d'un transfert électrique entre deux réseaux (11, 12), ledit dispositif (10) étant un dispositif bidirectionnel en courant, qui assure l'isolation électrique entre ces deux réseaux (11, 12), et qui comprend plusieurs interrupteurs (Qi, L, C), caractérisé en ce qu'il comprend :
- un modulateur (16) contrôlé en courant pour le pilotage des interrupteurs de manière à limiter le courant crête dans ces interrupteurs et le courant continu en sortie,
- un étage de puissance bidirectionnel (13),
- un étage transformateur bidirectionnel (14) d'un point de vue échange énergétique et limité en courant crête, pour fournir une tension et un courant régulé et pour assurer une isolation galvanique ;
une chaîne de commande de l'étage de puissance comportant :
. un circuit d'adaptation d'impédance (15),
. une cellule (16) de commande en courant reliée à l'étage de puissance par l'intermédiaire d'un étage "driver" (17) et qui reçoit un signal issu d'un module horloge (18) et un signal provenant du réseau d'entrée,
- un étage push-pull (19) bidirectionnel en courant.

2/ Dispositif selon la revendication 1, caractérisé en ce qu'il fonctionne en régime échantillonné en utilisant des interrupteurs sans pertes.

3/ Dispositif selon l'une quelconque des revendications 1 ou 2, caractérisé en ce que l'excès d'énergie est récupéré et transféré de la sortie de ce dispositif (10) vers le premier réseau (11), et en ce que cet excès d'énergie est minimisé par l'augmentation en bande passante dudit dispositif.

4/ Dispositif selon la revendication 1, caractérisé en ce que l'étage de puissance (13) comprend des éléments réactifs (LC) associés aux interrupteurs de l'étage de puissance (13) ($Q_1$ et $Q_2$), l'isolation galvanique étant obtenue grâce à l'étage transformateur (14), en découpant à 50% de rapport cyclique la tension continue générée au point milieu d'un transformateur ($T_r$), au moyen des interrupteurs ($Q_3$ et $Q_4$) de l'étage push-pull (14), l'énergie transferrée au secondaire du transformateur (Tr), sous forme de tension alternative rectangulaire étant rectifiée par des interrupteurs ($Q_5$ et $Q_6$) et filtrée par un réseau ($L_sC$).

5/ Dispositif selon la revendication 4, caractérisé en ce que les transistors utilisés sont des transistors HexFet qui présentent une faible résistance dans les deux sens.

6/ Dispositif selon l'une quelconque des revendications précédentes, caractérisé en ce qu'il peut assurer l'asservissement des paramètres des deux réseaux associés, en statique et en dynamique, l'un jouant le rôle de source d'énergie, l'autre celui de récepteur, par simple variation du point de fonctionnement.

# FIG.1

# FIG.2

FIG.3

FIG.4

FIG.5

FIG.6

FIG.7

Office européen
des brevets

RAPPORT DE RECHERCHE EUROPEENNE

Numero de la demande

EP    90 10 6748

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y,D | PESC '86 – 17 th Annual IEEE Power Electronics Specialists Conference 1986, New York US pages 684 – 695; A. Capel et al.: "A bi-directional high power using large signal feedback control with maximum current conduction control (MC3) for space application" * le document en entier * --- | 1-6 | H02J1/10 H02M3/335 |
| Y | INTELEC '86 – Conference Proceedings Toronto 22 octobre 1986, New York US pages 437 – 443; E. Rhyne et al.: "A new concept for DC to AC inverters and ringing generators" * le document en entier * --- | 1-6 | |
| A | PESC ' 86 17 th Annual IEEE Power Electrics Specialists Conference 1986, New York US pages 367 – 374; T. Nimoya et al.: "Analysis of the static and dynamic characteristics of push-pull parallel resonant converters" * le document en entier * ----- | 1-6 | |

**DOMAINES TECHNIQUES RECHERCHES (Int. Cl.5 )**

H02J
H02M

Le présent rapport a été établi pour toutes les revendications

| Lieu de la recherche | Date d'achèvement de la recherche | Examinateur |
|---|---|---|
| LA HAYE | 14 JUIN 1990 | SCHOBERT D.A.V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P0402)